# EUROPEAN PATENT SPECIFICATION

(11) **EP 1 170 416 B1**
(45) Date of publication and mention of the grant of the patent: **26.08.2009**
(21) Application number: 01115632.0
(22) Date of filing: 03.07.2001
(51) Int. Cl.: D06N 3/14, C09J 175/04, B32B 27/12, B32B 7/12, B32B 27/40, C08G 18/12, C08G 18/08, C08G 18/28, C08G 18/66

(54) **Aqueous dry laminate adhesive composition for artificial leather and manufacturing method for artificial leather using the same**
Trockenlaminierte wässrige Klebstoffzusammensetzung für Kunstleder und Verfahren zur Herstellung von Kunstleder mit dieser Klebstoffzusammensetzung
Composition aqueuse adhésive pour laminés formés à sec pour cuir artificiel et procédé pour la fabrication de cuir artificiel utisant la dite composition

(30) Priority: 05.07.2000 JP 2000203609
(43) Date of publication of application: 09.01.2002
(73) Proprietor: DIC Corporation, Tokyo (JP)
(72) Inventor: Satake, Eiji, Kishiwada-shi, Osaka (JP); Takeda, Shingo, Izumiotsu-shi, Osaka (JP); Tanaka, Kazunori, Izumi-shi, Osaka (JP); Hashimoto, Yutaka, Sakai-shi, Osaka (JP)
(74) Representative: Albrecht, Thomas

(56) References cited:
- EP-A- 0 002 465
- EP-A- 0 122 554
- DATABASE WPI Section Ch, Week 200103 Derwent Publications Ltd., London, GB; Class A25, AN 2001-018697 XP002265701 & JP 2000 108289 A (DAINIPPON INK & CHEM INC), 18 April 2000 (2000-04-18)

## Description

### BACKGROUND OF THE INVENTION

### Field of the Invention

The present invention relates to an aqueous adhesive composition suitable for producing artificial leather and to a manufacturing method for the artificial leather using the same. The "artificial leather" in the present invention includes fiber sheets such as knit and woven cloth, nonwoven fabric cloth; fiber sheets processed by coating (including foam coating) with organic solvent type or aqueous type resins, preferably polyurethane resin, cloths containing a porous layer by impregnated processing; or cloth products formed using a natural leather material such as split leather.

### Description of the Related Art

The conventional manufacturing method of artificial leather comprises the steps of forming a skin layer by coating an organic solvent solution of urethane resin on a release paper, forming a adhesive layer by coating an adhesive material containing a crosslinking agent in an organic solvent solution of urethane resin, and a finishing process by a wet laminate method in which a fabric base material is adhered to the adhesive layer involving organic solvents or by a dry laminate method in which the fabric base material is adhered to the adhesive layer after drying

The organic solvent of the urethane resin used in the above-described manufacturing method is a mixture of several types of organic solvents. Thus, recovery of the organic solvents after vaporization in the drying process is actually extremely difficult, and, at present, vaporized solvents are discharged into the atmosphere or treated by incineration. In some cases, solvents such DMF having a high boiling point are used as one type of the solvent in a solvent mixture. Such solvents remain in artificial leather even after drying, and the toxicity of the solvent caused problems.

In order to solve the above-described problem, although an attempts have been made to replace the organic solvent with water, but the efforts to obtain an artificial leather using water has been unsuccessful. When a conventional wet laminate methods were carried out by laminating the fabric base material on a coated adhesive layer formed by a mixed solution of the water-borne urethane resin with a thickener, the quality of the artificial leather was not satisfactory in appearance, feeling, or adhesive strength. The reasons for the inferior quality are (1) when the lamination is performed at a constant pressure, the adhesive is apt to penetrate into or to stick out from the fabric base material, because this adhesive is more thixotropic than the normal organic solvent type adhesives, and (2) the drying speed of this aqueous adhesive is slow and the water vapor penetrates between the skin layer and the release paper which causes adhesive degradation of the skin layer.

In contrast, although attempts have been made to apply this water-borne polyurethane resin to the dry laminate process, conventional water-borne polyurethane resins do not exhibit good adhesive properties, and the laminating process must be conducted under high temperature and high pressure, which results in degrading the appearance of the skin layer or degrading the feel by crushing the foam layer, if present, in the artificial leather.
JP-A-200108289 discloses a method for making an artificial leather by dry lamination using a water-based polyurethane adhesive comprising a polyisocyanate crosslinker, a thickner and a colorant.

### SUMMARY OF THE INVENTION

Therefore, an object of the present invention, relating to a manufacturing method for artificial leather, containing no organic solvent or almost no organic solvent, is to provide a dry laminate adhesive composition for an artificial leather, (1) which uses water as the solvent, (2) which exhibits a sufficient initial adhesive property after drying at a comparatively low temperature, (3) which has a sufficient adhesive property similar to that of an organic solvent-type adhesive even after lamination, and (4) which is capable of producing artificial leather products having superior appearance and feeling; and to provide a manufacturing method for artificial leather using the aqueous dry laminate adhesive composition.

The inventors of the present invention conducted a series of studies in order to obtain an aqueous dry laminate adhesive composition suitable for manufacturing artificial leather by the dry laminating process, and the present invention has been accomplished.

That is, the present invention provides an aqueous dry laminate adhesive composition for artificial leather comprising (A) a water-borne polyurethane resin, (B) a crosslinking agent, and (C) a thickener, wherein said water-borne polyurethane resin (A) has a softening temperature of less than 80°C and a viscosity of the melt at 80°C of less than 10⁵ Pa·s, when the softening temperature and the melt viscosity are measured using a Capillary Rheometer Shimadzu Flow Tester CFT-500D using an orifice having an inner diameter of 1 mm and a length of 1 mm and applying a load of 294.2 N (30 kgf), and when the temperature is increased at a rate of 3°C/min, the temperature at which the flow starts is defined as the softening temperature, and the melt viscosity is defined as the viscosity of the melt at the softening temperature, and
wherein a softening temperature of a cured product obtained after curing a reaction product between said water-borne polyurethane resin (A) and the crosslinking agent (B) is higher than 120°C, **characterized in that** the composition further comprises
(D) a colorant, and in that
said water-borne polyurethane resin (A) has a weight-average molecular weight ranging from 2,000 to 200,000 and has a hydrophilic group and at least two groups containing active hydrogen atoms, which groups containing active hydrogen atoms are reactive with isocyanate groups and are selected from the group consisting of a carboxyl group, a hydroxyl group, and an amino group, and a content of said hydrophilic groups in the water-borne polyurethane resin (A) is at least 0.005 to 0.2 equivalent per 100 parts by weight of the finally obtained polyurethane resin, when the hydrophilic groups are ionic groups,
wherein said crosslinking agent (B) is a polyisocyanate compound, and said thickener (C) is an association polymer-type surface active agent, and said colorant (D) is constituted by water dispersible pigments, the surface of which is coated with water dispersible resins.

The present invention also provides a manufacturing method for artificial leather comprising the steps of forming the adhesive layer by coating the adhesive on the skin layer formed beforehand on a release paper, and forming the artificial leather by the dry laminating process between the adhesive layer and the fabric base material, and the present invention also provides artificial leather obtained by the above-described manufacturing method.

### DETAILED DESCRIPTION OF THE INVENTION

Hereinafter, the present invention will be described in detail.

The present invention provides an aqueous dry laminate adhesive composition for artificial leather comprising (A) a water-borne polyurethane resin, (B) a crosslinking agent, and (C) a thickener, wherein said water-borne polyurethane resin (A) has a softening temperature of less than 80°C and a viscosity of the melt at 80°C of less than 10⁵ Pa·s, when the softening temperature and the melt viscosity are measured using a Capillary Rheometer Shimadzu Flow Tester CFT-500D using an orifice having an inner diameter of 1 mm and a length of 1 mm and applying a load of 294.2 N (30 kgf), and when the temperature is increased at a rate of 3°C/min, the temperature at which the flow starts is defined as the softening temperature, and the melt viscosity is defined as the viscosity of the melt at the softening temperature, and
wherein a softening temperature of a cured product obtained after curing a reaction product between said water-borne polyurethane resin (A) and the crosslinking agent (B) is higher than 120°C, **characterized in that** the composition further comprises
(D) a colorant, and in that
said water-borne polyurethane resin (A) has a weight-average molecular weight ranging from 2,000 to 200,000 and has a hydrophilic group and at least two groups containing active hydrogen atoms, which groups containing active hydrogen atoms are reactive with isocyanate groups and are selected from the group consisting of a carboxyl group, a hydroxyl group, and an amino group, and a content of said hydrophilic groups in the water-borne polyurethane resin (A) is at least 0.005 to 0.2 equivalent per 100 parts by weight of the finally obtained polyurethane resin, when the hydrophilic groups are ionic groups,
wherein said crosslinking agent (B) is a polyisocyanate compound, and said thickener (C) is an association polymer-type surface active agent, and said colorant (D) is constituted by water dispersible pigments, the surface of which is coated with water dispersible resins.

If the softening temperature of the polyurethane resin (A) exceeds 80°C or if the melt viscosity at 80°C exceeds 10⁵ Pa · s, the adhesive strength of the adhesive layer becomes insufficient at the time of producing artificial leather by the laminating process, which results in an insufficient initial adhesive strength because of the insufficient wettability between the skin layer and the fabric base material. Thus, it is preferable that the softening temperature of the water-borne polyurethane resin be equal to or less than 50°C and that the melt viscosity at 50°C exceeds 10⁵ Pa · s.

The above-mentioned softening temperature and the melt viscosity are measured using a CAPILLARY RHEOMETER SHIMADZU FLOW TESTER CFT-500D produced by Shimadzu Seisakusyo Co. Ltd. The test was performed using an orifice having an inner diameter of 1 mm and a length of 1mm and applying a load of 294.2 N (30 kgf), and when the temperature is increased at a rate of 3°C/minute, the temperature at which the flow starts is defined as the softening temperature, an the melt viscosity is defined as the viscosity of the melt at the softening temperature.

The water-borne polyurethane resin used in the present invention possesses, in the molecule and/or at the terminal ends of this water-borne polyurethane resin, at least two active-hydrogen-atom containing groups which are reactive with isocyanate groups, in order to provide a softening temperature of more than 120°C, preferably within a range of 120 to 250°C, for the cured resin product after reaction of the water-borne polyurethane resin (A) and the crosslinking agent (B). It is preferable that a weight-average molecular weight (hereinafter, referred to as average molecular weight or molecular weight) per equivalent of the active-hydrogen-atom containing groups is 1,000 to 15,000. When the unit weight-average molecular weight is less than 1,000, although the wettability to the skin layer or the fabric base material is improved, the initial adhesive strength and the long-term adhesive strength become insufficient due to the penetration of the adhesive into the fabric base material and also due to its poor cohesion. The most preferable unit weight-average molecular weight is 2,000 to 10,000.

Examples of active-hydrogen-atom containing groups include a phenolic hydroxyl group, a carboxyl group and its salt, a hydroxyl group, an amino group, and a mercapto group. However, according to the present invention, a carboxyl group, a hydroxyl group, and an amino group are selected as the groups containing active hydrogen.

Any conventionally known method can be used for introducing the carboxyl group, the hydroxyl group, and the amino group. Examples of the various methods include, for example, a method of introducing a hydroxyl group at the terminal end, obtained by the reaction of the excess polyol and/or glycol with polyisocyanate and another method of introducing a hydroxyl group by reacting urethane prepolymer at the terminal end of an isocyanate group with aminoalcohols or aminophenols such as 2-aminoethanol, 2-aminoethylethanolamine, and diethanolamine.

Examples for introducing a carboxyl group include a method to obtain a compound containing a carboxyl group by copolymerization of a compound containing carboxyl group at the time of the urethanization reaction. For example, the carboxyl group can be introduced into a compound by reacting the urethane prepolymer at the isocyanate terminal end of the isocyanate with an excess amount of the amine compounds with respect to the isocyanate groups.

Examples of polyisocyanate compounds used for (A) water-borne polyurethane resin includes, for example, 2,4-tolylenediisocyanate, 2,6-tolylenediisocyanate, m-phenylenediisocynate, p-phenylenediisocyanate, 4,4'-diphenylmethanediisocyanate, 2,4'-diphenylmethanediisocynate, 2,2'-diphenylmethanediisocyanate, 3,3'-dimethyl-4,4'-biphenylenediisocynate, 3,3'-dimethoxy-dimethyl-4,4'-biphenylenediisocynate, 3,3'-dichloro-4,4'-biphenylenediisocyanate, 1,5-naphthalenediisocyanate, 1 ,5-tetrahydronaphthalenediisocyanate, tetramethylenediisocyanate, 1,6-hexamethylenediisocyanate, dodecanemethylenediisocyanate, trimethylhexamethylenediisocyanate, 1,3-cyclohexylenediisocynate, 1,4-cyclohexylenediisocyuate, hexylenediisocyanate, tetramethylxylenediisocyanate, hydrogenated xylyrenediisocyanate, lydienediisocyanate, isophoronediisocyanate, 4,4'-dicyclohexylmethanediisocyanate, and 3,3'-dimethyl-4,4'-dicyclohexylmethanediisocyanate. When the material cost of the water-borne polyurethane resin is considered, it is preferable to use 2,4-tolylenediisocyanate and 2,6-tolylenediisocyanate. In order to prevent degradation due to light and heat of the water-borne polyurethane resin, it is preferable to use 1, 6-hexamethylenediisocyanate, isophoronediisocyanate, or 4, 4' -dicyclohexylmethanediisocyanate.

Examples of the active-hydrogen-atom containing compounds which are reactive with the isocyanate group used at the time of manufacturing the water borne polyurethane resin (A) may be classified into two groups, with one group including compounds having high weight-average molecular weight in a range of 300 to 10,000, more preferably in a range of 500 to 5,000, and the other group including compounds having a low number average molecular weight of less than 300. Note that it is more preferable to use a combination of those two groups.

Examples of the above-described high-molecular-weight active-hydrogen-atom containing compounds include polyesterpolyol, polyetherpolyol, polycarbonatepolyol, polyacetalpolyol, polyacrylatepolyol, polyesteramidepolyol, polythioetherpolyol, and polyolefinpolyols such as polybutadiene.

Examples of polyesterpolyols include various compounds obtained by dehydrated condensation polymerization of glycol components and acid components, and polyesters obtained by the ring opening reactions of cyclic ester compounds and their copolymerization polyesters. Examples of the glycol components used for obtaining the above-mentioned polyesterpolyols include ethyleneglycol, propyleneglycol, 1,3-propanediol, 1,4-butanediol, 1,5-pentanediol, 3-methyl-1,5-pentanediol, 1,6-hexanediol, neopenthylglycol, diethyleneglycol, triethyleneglycol, tetraethyleneglycol, polyethyleneglycol (the weight-average molecular weight: 300 to 6, 000), dipropyleneglycol, tripropyleneglycol, bishydroxyethoxybenzene, 1,4-cyclohexanediol, 1,4-cyclohexanedimethanol, bisphenol A, hydrogenated bisphenol A, hydroquinone and its alkyleneoxide added glycols. Examples of the acid components for obtaining the above-mentioned polyesterpolyols includes succinic acid, adipic acid, azelaic acid, sebacic acid, dodecanedicarboxylic acid, maleic acid anhydride, fumaric acid, 1 ,3-cyclopentanedicarboxylic acid, 1 ,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, bisphenyldicarboxylic acid, 1 ,2-bis(phenoxy)ethane-p,p'-dicaroboxylic acid, and anhydrides or esterified derivatives of these dicarboxylic acids; p-hydroxybenzoic acid, p-(2-hydroxyethoxy)benzoic acid, and esterified derivatives of these hydroxycarboxylic acid.

Examples of polyetherpolyols as a high-molecular-weight active-hydrogen-atom containing compound include compounds obtained by a known addition polymerization of one, two or more than two monomers of ethylene oxide, propylene oxide, butylene oxide, styrene oxide, epichlorhydrine, tetrahydrofuran, cyclohexane, and the like using one, two or more than two initiators, which contain at least two active hydrogen atoms, such as ethyleneglycol, diethyleneglycol, triethyleneglycol, propyleneglycol, trimethyleneglycol, 1,3-butanediol, 1,4-butanediol, 1,6 hexanediol, neopentylglycol, glycerine, trimethylolethane, trimethylolpropane, sorbitol, saccharose, aconite-sugar, trimeritic acid, hemimeritic acid, phospahte, ethylenediamine, diethylenetriamine, triisopropanolamine, pyrogallol, dihydroxybezoic acid, hydroxyphthalic acid, and 1,2,3-propanetrithiol. In addition, examples of polyetherpolyols include compounds obtained by ring opening polymerization of the above-described monomers containing at least two active hydrogen atoms using catalysts such as cationic catalysts, protonic acids, Lewis-acids, and the like.

Examples of polycarbonatepolyols as a high-molecular-weight active-hydrogen-atom containing compounds include products obtained by reactions of glycols such as 1,4-butanediol, 1,6- hexanediol, and diethyleneglycol with diphenylcarbonate and phogene.

The above-described low-molecular-weight active-hydrogen-atom containing compounds correspond to compounds having a lower weight-average molecular weight of 300. Examples of such low-molecular weight compounds are as follows. Polyhydroxy-compounds such as glycerine, trimethylolmethane, trimethylolpropane, sorbitol, and pentaerythritol; amine compounds such as ethylenediamine, 1,6-hexamethyleneamine, piperazine, 2,5-dimethylpiperadine, 3,3'-dimethyl-4,4'-dicyclohexylmethanediamine, 1,4-cyclohexanediamine, 1,2-propanediamine, diethylenetriamine, and triethylenetetraamine; and hydrazine.

Examples of compounds containing hydrophilic groups contained in the water-borne polyurethane resin (A) include compounds containing carboxyl groups, sulfonate groups, and their salts; nonionic compounds containing at least one active hydrogen atom in the molecule and containing groups composed of repeating units of ethylene oxide; or repeating units of ethylene oxides and repeating units of other alkylene oxides.

The above-described compounds containing carboxyl groups include compounds containing carboxylic acid, and their derivatives and their salts, and polyesterpolyols obtained by use of these compounds. Examples of such carboxylic acids include 2,2-dimethylpropionate, 2,2-dimethylol butyric acid, 2,2-dimethylolvarelic acid, dioxymaleic acid, 2,2-dioxybenzoic acid, and 3 ,4-diaminobenzoic acid, and more examples are amino acids such as alanine, aminobutyric acid, aminocaproic acid, glycine, glutamic acid, aspartic acid, and hystidine; carboxylic acids such as succinic acid, adipic acid, maleic acid anhydride, phthalic acid, and trimeric acid anhydride.

Examples of compounds containing sulfonic acid groups include compounds containing sulfonic acid groups and their derivatives, and compounds obtained by copolymerization of these compounds. Examples of compounds containing sulfonate groups include 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, 2,4-diaminotoluene-5-sulfonic acid. Examples of compounds obtained by copolymerization include polyesterpolyol, polyamidepolyol, and polyamidepolyesterpolyol.

By converting these carboxylic acid groups or sulfonic acid groups to salts by neutralization, the finally obtained polyurethane resin can be dispersed in water. Examples of neutralizers used for the above-described neutralization include non volatile bases such as sodium hydroxide and potassium hydroxide; tertiary amines such as trimethylamine, triethylamine, dimethylethanolamine, methyldiethanolamine, and triethanolamine; and volatile bases such as ammonia. The neutralization reaction can be carried out before, during, or after the urethane forming reaction.

Furthermore, the above-described compounds containing nonionic groups are constituted by compounds having more than 30% by weight of repeating ethylene oxide unit, having at least one active hydrogen atom, and having molecular weights in a range of 300 to 20, 000. Examples of such compounds include polyoxyethyleneglycol, polyoxyethylene and polyoxypropylene copolymer glycol, polyoxyethylene and polyoxybutylene copolymer glycol, polyoxyethylene and polyoxyalkylene copolymer glycol; copolymer glycol compounds containing nonionic groups such as monoalkylether; and polyesterpolyols obtained by copolymerization of these compounds.

In order to introduce hydrophilic groups into the water-borne polyurethane resin, the above-described compounds may be used alone or in combination of two or more.

The water-borne polyurethane resin (A) used in the present invention is required to contain at least 0.005 to 0.2 equivalent, and preferably 0,01 to 0.1 equivalent hydrophilic groups per 100 parts by weight of the finally obtained polyurethane resin, when the hydrophilic groups are ionic groups such as carboxyl groups or sulfonic groups.

In contrast, when the compounds containing nonionic groups are used, it is preferable to use at least 1 to 30 weight parts, preferably 5 to 20 weight parts, of the compound per 100 parts solid contents of the finally obtained polyurethane resin.

At the time of manufacturing the water-borne polyurethane resin (A) of the present invention, an emulsifier may be added to a raw material including the above-described compounds containing the above hydrophilic groups. Examples of such emulsifiers include nonionic emulsifiers such as polyoxyethylenenonylphenylether, polyoxyethylenelaurylether, polyoxyethylene-styrenized phenylether, polyoxyethylenesorbitoltetraoleate; anioinc emulsifiers such as fatty acid salts such as sodium oleate; alkylsulfate, alkylbenzenesulfonate, alkylsulfosuccinate, naphthalenesulfonate, alkanesulfonate sodium salt, alkyldiphenylethersulfonate sodium salt; nonionic emulsifiers such as polyoxyethylenealkylsulfate sodium salt and alkyldiphenylether sufonic acid sodium salt; cationic emulsifiers such as alkyltrimethylammonium salt; and special emulsifiers such as fluorine-containing and silicone-containing emulsifiers.

Any conventionally known manufacturing method can be applied to manufacturing the water-borne polyurethane resin (A), and some examples of the manufacturing methods are described below.
(1) A method comprising the steps of preparing an organic solvent solution of a polyurethane resin containing carboxyl groups, by reacting a compound containing active hydrogen atoms and a compound containing carboxyl groups with polyisocyanate, and then adding a nonionic emulsifier and a neutralizer, if necessary, to the organic solvent solution or an organic solvents dispersion, and obtaining an aqueous dispersion of the water-borne polyurethane resin by mixing the above-described solution containing additives with water.
(2) A method comprising the steps of preparing a polyurethane prepolymer containing carboxyl groups and containing isocyanate groups at the terminal ends of the prepolymer, by reacting a compound containing active hydrogen atoms and a compound containing carboxyl groups with isocyanate, mixing the prepolymer with an aqueous solution containing a nonionic emulsifier and a neutralizer, if necessary, or adding a neutralizer in advance to the urethane prepolymer, dispersing the urethane prepolymer in the aqueous solution containing a nonionic emulsifier, and obtaining an aqueous dispersion by reacting polyamine with polyisocynate groups including the prepolymer.
(3) A method comprising the steps of preparing a polyurethane resin containing hydrophilic groups by reaction of a compound containing active hydrogen atoms and a compound containing carboxyl groups with isocyanate, preparing an organic solvent solution or an organic solvent dispersion of the polyurethane resin, and obtaining a aqueous dispersion by mixing the above organic solution and water, if necessary, with an addition of a neutralizer.
(4) A method comprising the steps of preparing a polyurethane prepolymer containing carboxyl groups and isocyanate groups at the terminal ends of the prepolymer, by reacting a compound containing active hydrogen atoms and a compound containing carboxyl groups with isocyanate, mixing the prepolymer with an aqueous solution containing a neutralizer, or adding a neutralizer to the prepolymer, and mixing with water, and further adding a polyamine for obtaining an aqueous dispersion.
(5) A method comprising the steps of preparing a polyurethane prepolymer containing carboxyl groups and containing isocyanate groups at terminal ends of the prepolymer, by reacting a compound containing active hydrogen atoms and a compound containing carboxyl groups with isocyanate, mixing with an aqueous solution containing a neutralizer and polyamine, or adding a neutralizer to the prepolymer beforehand, and mixing with a aqueous solution containing polyamine for obtaining an aqueous dispersion.

In the above-described methods shown in items (3), (4), and (5), it is possible to add an nonionic emulsifier to water or to the organic solvent solution or the organic solvent dispersion.

The above-described reactions in those methods can be carried out without a solvent. However, a solvent may be used to control the reaction system or reduce the viscosity of the reaction system. Although the type of organic solvent is not limited, examples of the organic solvents include aromatic hydrocarbons such as toluene and xylene; ketones such as acetone and methylethylketone; ethers such as tetrahydrofuran; acetic esters such as ethyl acetate and butyl acetate; amides such as dimethylforamide and N-methylpyrolidone. It is preferable to use organic solvents having comparatively low boiling points when removing the organic solvent by distillation. In addition, it is preferable to use a minimum amount of the organic solvent when the organic solvent has a boiling point higher than 100°C.

The water-borne polyurethane resin is used after removing the organic solvent by distillation, if necessary, but may be used together with the organic solvent.

Any distilling equipment may be used for removing the organic solvent by distillation, but it is preferable to use distilling equipment which has a high distilling efficiency or which does not discharge the organic solvent after distillation into air, and thin layer distilling equipment is preferable.

The crosslinking agent (B) used in the present invention is a polyisocyanate-type crosslinking agent. Examples of such crosslinking agents include a single polyisocyanate or a substantially hydrophobic polyisocyanate series such as a polyurethane prepolymer containing terminal isocyanate groups obtained by reactions of isocyanurate-type or buret-type polyisocyanate compounds with more than three functions and compounds containing active hydrogen atoms such as polyols having at least two functions; these polyisocyanate series with an additive of the above-described emulsifier to be dispersed in water; hydrophilic polyisocyanate series having a self-emulsifying property obtained by copolymerization of the polyisocyanate series with the compounds containing nonionic groups such as the compounds containing carboxyl groups or sulfonic acid groups; and combinations thereof.

In order to provide initial adhesiveness and adhesion durability between the skin layer, especially the skin layer formed by the organic solvent-type polyurethane, and the fabric base material, the polyisocyanate-type crosslinking agent (B) used in the present invention is used in combination with the water-borne polyurethane resin (A).

In order to provide long-term reliability of the moisture and temperature resistance of the final artificial leather, the polyisocyanate-type crosslinking agent is incorporated into the water-borne polyurethane resin such that the softening point of the cured resin is higher than 120°C, and more preferably, the softening temperature ranges from 140°C to 250°C. In order to obtain such a softening temperature, the ratio of the crosslinking agent containing the polyisocyanate (B) to the water-borne polyurethane resin is preferably set in a range of 1/100 to 3/100 (weight ratio of the solid content of each), or more preferably, set in a range of 2/100 to 20/100 (weight ratio of the solid content of the each).

At the time of coating on the skin layer formed on the release paper, it is necessary to adjust the viscosity of the aqueous dry laminate adhesive composition in accordance with the coating method thereof, and the adjustment is executed by the use of the thickener (C). The thickener (C) is compatible with the water-borne polyurethane resin (A). Examples of the thickener (C) include thickeners in the system of association polymer-type surface active agents such as urethane or polyether systems.

In the present invention, since thickeners in the system of association polymer-type surface active agents exhibit good compatibility with the water-borne polyurethane resin (A), and a comparatively stable viscosity over a wide range of shearing forces, this type of thickener is used due to its superior handling properties such as a high leveling property or high adjustability of the coat thickness. The thickener may be used alone or in combinations of two or more.

The aqueous dry laminate adhesive for the artificial leather according to the present invention is used for adhering the skin layer and the impregnated layer or the base material. The artificial leather obtained by adhering the skin layer and the base material is colored depending upon the use and design. Therefore, the adhesive used for the artificial leather is colored the same tone as that of the other layers of the artificial leather as the skin layer, the impregnated layer and the base layer.

In order to color the aqueous adhesive composition of the present invention, an aqueous dispersible colorant (D), which is obtained by coating the surfaces of pigment particles with an aqueous dispersible resin is used. Colorants containing pigment particles coated by a water-bome polyurethane resin are preferable as the aqueous dispersible colorants (D). The most preferable colorants are a series of colorants in which pigment particles are coated with an water-borne polyurethane resin obtained by using dimerdiol or dimer-acid-type polyesterpolyol. Such polyurethane resins are obtained by a reaction of three components such as (1) (a) dimerdiol obtained by reducing polymerized fatty acids, (b) polyesterpolyol obtained by a reaction between a dimerdiol and a polybasic acid, and (c) one, two or more polyols obtained by a reaction between a hydrogenated dimer acid obtained by hydrogenation of a polymerized fatty acid and a polyhydric alcohol, (2) the above-described polyisocyanate, and (3) a compound having at least one hydrophilic group and at least one group containing at least two active hydrogen atoms. In this reaction, it is possible to use the other polyol in addition to the above-described polyols, if necessary. It is also possible to use either one or both of a known chain extender agent and a urethanization stopper.

Various dispersion systems such as emulsions of the vinylacetate-type, ethylenevinylacetate-type, acrylic-type, and acrylic styrene-type; latexes of the styrene-butadiene-type, acrylonitril-butadiene-type, acryl-butadiene-type; ionomers of the polyethylene-type and polyolefin-type; and aqueous dispersions or water dispersions of polyester, polyurethane, polyethylene, polyamide, epoxy resin, and the like, may be introduced into the aqueous dry laminate adhesive composition for artificial leather of the present invention in addition to water, in an amount which does not exceed the scope of the present invention

Furthermore, it is possible to include various components such as dibutyltinlaurate as a urethanization catalyst; various stabilizers including antioxidants of the hindered phenol-type, hindered-amine-type, and natural-type; hindered amine-type light resistant stabilzers; and ultraviolet light absorbants of the benzophenon-type, benzotriazol-type, and cyanoacrylate-type; various leveling agents including hydrocarbons such as acetyleneglycol-type and fluorine-type, and silicone-type; antifoamers in a system of mineral oils or silicones; plasiticizers, tackifiers, and service life extension agents.

The aqueous dry laminate adhesive composition obtained by the above-described combinations is formed as an adhesive layer by coating and drying on the skin layer formed on the release paper and subsequently obtained the artificial leather by dry lamination between the fabric layer and the adhesive layer.

The skin layer described above is a layer formed by using, as a major constituent, an organic solvent solution of a polyurethane resin or a water borne polyurethane resin, and the composition of the polyurethane resin is not limited. In general, the thickness of the skin layer ranges from 5 to 100 µm.

The release paper used in the present invention is not limited if the paper has a releasing property, and commercial release papers used for organic solvent-type use or for aqueous-type use can be used.

Any known method can be adopted for coating the aqueous dry laminate adhesive compositions on the skin layer, and there are various known coating methods such as the gravure roll method, reverse roll method, rod method, and knife overroll method. The thickness of the coat after drying ranges from 5 to 100 µm.

Any known method can be applied for drying the coated layer of the aqueous dry laminate adhesive composition. Drying apparatuses include hot air dryers, infrared dryers, microwave dryers, and a combination of one or more of these dryers. The drying conditions are not limited, if the conditions are sufficient to evaporate the water content in the aqueous dry laminate adhesive composition. In general, the drying is performed at temperatures ranging from 40 to 180°C. However, excessive drying is not preferable because it not only causes thermal degradation or degeneration of the skin layer, base fabric layer, and adhesive layer, but also causes poor adhesion by accelerating the curing reaction between the water-borne polyurethane resin and the polyisocyanate compound. Thus, a preferable temperature range, from this point of view, is a low temperature range from 60 to 120°C.

Since the adhesive layer formed as described above has sufficient adhesive strength, a artificial leather can be obtained by laminating the base fabric material using compression rolls at pressures ranging from 0.01 to 3 MPa, and preferably at pressures ranging from 0.05 to 1 MPa. The synthetic resins obtained by the above adhesion process have a soft feeling without any penetration or extrusion of the adhesive material into the base fabric material. Thereafter, the artificial leather thus formed is subjected to aging, if necessary, at temperatures ranging from 20 to 60°C. The artificial leather after aging is provided with further improved adhesion, and the resulting artificial leather is superior in an antihydrolysis property, a moisture and heat proofing property, a cold resistance, a reliable durability in wet condition, and is durable when wet and dry washed.

The base fabric materials used in the present invention include a wide range of fabric materials, if the materials are applicable to manufacturing of the synthetic resins. For example, synthetic fibers such as polyamides, polyesters, and polyacryls, and their modified fabrics; natural fibers such as wool, silk, cotton, and flax; semi synthetic fibers such as acetates and rayon; and fabric sheets such as textiles, clothes and unwoven clothes made of a combination of these mixed fabrics. Furthermore, the fabric materials include fabric sheets having porous layers, formed by coating or impregnating organic solvent-type or aqueous-type resins, and the polyurethane resin is particularly preferable in the present invention. Furthermore, natural leather materials such as split leather can also be used.

The artificial leather obtained by the method according to the present invention can be put to practical use after applying surface treatments such a top coating or rubbing finish.

### Embodiments

Hereinafter, the present invention will be described according to following examples. However, note that the present invention is not limited to these examples. The parts in the following examples represented parts by weight.

### Synthesis Example 1 (Preparation of an water-borne polyurethane resin)

500 parts of polyesterpolyol, composed of neopentylplycol/1,6-hexanediol/adipic acid having molecular weight of 2,000, 500 g of polypropyleneglycol, 21.2 parts of 1,6 hexane diol, 38.5 parts of dimethylolpropionic acid, 4.6 parts of polyoxyethylenemonomethylether having molecular weight of 2,000, and 227.5 parts of tolylenediisocyanate were reacted in 646 parts of toluene and an isocyanate-terminal prepolymer was obtained. After 29 parts of triethylamine were added, 1263 parts of water were added while stirring with a homomixer and an emulsion was obtained. In the emulsion, a solution of 26 parts of piperazine and 11.2 parts of diethanolamine dissolved in 149 parts of water were added for extending the molecular chain, and finally, the solvent was removed by distillation under a reduced pressure and an water-borne polyurethane resin, having a solid content of 45%, was obtained.

The flow starting temperature and the viscosity of the melt were measured by use of the above-described FLOW METER CFT-500D (produced by Shimadzu Seisakusyo Co.) using an orifice having an inside diameter of 1 mm and a length of 1mm while applying a load of 294.2 N (30 kgf), and the temperature was increased at a rate of 3°C/minute. The results of the measurement showed that the softening temperature was less than 40°C and the viscosity at 80°C was 11×10³ Pa · s.

### Synthesis Example 2 (Preparation of a water-borne polyurethane resin)

1,000 parts of polytetramethyleneetherglycol having a molecular weight of 2,000, 45.9 parts of neopentylglycol, 45.1 parts of dimethylolpropionic acid, 75.7 parts of polyoxyethylene-polyoxypropylene monomethylether, and 345.8 parts of isophoronediisocyanate were reacted in 648 parts of methylethylketone and an isocyanate terminal prepolymer were synthesized. In addition, 34 parts of trimethylamine was added and while stirring by a homomixer, 1587 parts of water was added to obtain an emulsion. Furthermore, a water solution of 22 parts of isophoronediamine and 27.2 parts of diethanolamine were dissolved in 197 parts of water to extend the molecular chain. Finally an water-borne polyurethane having a solid content of 40 % were obtained by removing the organic solvent by distillation.

The flow starting temperature and the viscosity of the melt were measured by use of the FLOW TESTER CFT-500D (produced by Shimadzu Seisakusyo Co. Ltd.) using a orifice having an inside diameter of 1 mm and a length of 1mm while applying load of 294,2N (30 kgf) and the temperature was increased at a rate of 3°C/minute. The results of the measurement showed that the softening temperature was less than 40°C and the viscosity of the melt at 80°C was 2.2 ×10⁴ Pa · s.

### Synthesis Example 3 (Preparation of an water-borne polyurethane resin)

1,000 parts of polytetramethyleneetherglycol having a molecular weight of 2,000, 45.9 parts of neopentylglycol, 45.1 parts of dimethylolpropionic acid, 75,7 parts of polyoxyethylene-polyoxypropylene monomethylether, and 345.8 parts of isophoronediisocyanate were reacted in 648 parts of methylethylketone and an isocyanate terminal prepolymer was obtained. After adding 34 parts of triethylamine, 1587 parts of water were added and an emulsion was obtained while stirring by a homomixer. In addition, a solution of 44 parts of isophoronediamine dissolved in 197 parts of water was added to extend the molecular chain. Finally, water-borne polyurethane having a solid content of 40% was obtained by removing the organic solvent by distillation.

The flow starting temperature and the viscosity of the melt were measured by use of the FLOW METER CFT-500D (produced by Shimadzu Seisakusyo Co. Ltd.) using an orifice having an inside diameter of 1 mm and a length of 1 mm while applying a load of 294.2 N (30 kgf), and the temperature was increased at a rate of 30°C/minute. The results of the measurement showed that the softening temperature was as high as 110°C and the viscosity of the melt at 80°C was not obtained because the sample did not melt at 80°C.

### Synthesis Example 4 (Preparation of association-type thickener)

600 parts of polyethyleneglycol having a molecular weight of 8,000 and 133 parts of an addition product of 12 mol of ethylene oxide to distyrenized methylphenol were mixed and after dehydration at 105°C under a reduced pressure, 37 parts of isophoronediisocyanate was added. The above material was reacted for 4 hours at 80 to 90°C and the reaction product was dissolved in water, and an association-type thickener, having a solid content of 20%, was obtained.

### Synthesis Example 5 (Preparation of association-type thickener)

500 parts of polyethyleneglycol having a molecular weight of 6,000 and 234 parts of a nonylphenol compounds with an addition product of 17 mol of ethylene oxide were mixed and after dehydration at 105°C under a reduced pressure, 35 parts of hexamethylenediisocyanate was added. The above material was reacted for 4 hours at 80 to 90°C and the reaction product was dissolved in water, and an association-type thickener, having a solid content of 20%, was obtained.

### Synthesis Example 6 (Preparation of an aqueous dispersion resin for surface treatment of a colorant)

136.8 parts of Pespol PP-299 (produced by Toa Gosei Co. Ltd, a trade name of hydrated dimer acid/polyesterpolyol of ethyleneglycol: a hydroxyl group value = 82 mgKOH/g) and 44.5 parts of isophoronediisocyanate were mixed. Then, the mixture was heated to 110°C while stirring. After 1 hour, the mixture was cooled to 80°C, 13.4 parts of dimethylolpropionic acid, 0.2 parts of tin octoate, and 200 parts of MEK were added and they were reacted for 7.5 hours at 80°C. The content of the NCO group at this time is 0.07% of solid content. After the reaction product was cooled below 30°C, 7.5 parts of 25% aqueous ammonia were added, and by addition of deionized water, an O/W-type emulsion was obtained. Thereafter, distillation was carried out under a reduced pressure, and after removing the solvent and a part of water, the concentration was adjusted by adding the deionized water and finally, a transparent water-borne polyurethane was obtained.

### Synthesis Example 7 (Preparation of an aqueous dispersion resin for surface treatment of a colorant)

294 parts of terephthalic acid, 294 parts of isophthalic acid, 131 parts of ethyleneglycol, and 223 parts of diethyleneglycol were mixed and the mixture was heated to a temperature ranging from 180°C to 230°C for 8 hours for conducting an esterification reaction. After the esterification reaction, a condensation reaction was conducted at 230°C for 6 hours until the acid value decreased less than 1. Thereafter, a dehydration treatment was conducted at 120°C under reduced pressure, and after cooling below 90°C, 263 parts of methylethylketone were added and the mixture was sufficiently stirred to dissolve the solid content and polyesterpolyol was obtained having an acid value of 0.7 and a hyroxyl group value of 50.

Thereafter, 226 parts of polyesterpolyol and 44 parts of isophoronediisocyanate were mixed and heated to 75°C while stirring, and 13 parts of 2,2-dimethylolpropionic acid was added as a chain extending agent and the reaction was conducted after heating at 70°C for 12 hours. After the reaction, the reaction product was cooled to 40°C, and a water solution was formed by adding 35 parts of 5% aqueous ammonia. Subsequently, methylethylketone was removed under a reduced pressure at 60°C from the transparent reaction product and the deionized water was added for adjusting the concentration, and finally transparent water-borne polyurethane was obtained.

### Synthesis Example 8 (Preparation of colorant)

Aqueous dispersion resins obtained in the Synthesis Examples 6 and 7 were mixed at ratios shown in Table 1 and colorants were obtained by milling the mixtures for 30 minutes with a paint conditioner.

**Table 1**

| | Colorant 1 | Colorant 2 | Colorant 3 | Colorant 4 |
|---|---|---|---|---|
| Synthesis Example4 | 20 | 20 | - | - |
| Synthesis Example 5 | - | - | 20 | 20 |
| Carbon Black | 30 | - | 30 | - |
| Titanium oxide | - | 50 | - | 50 |
| water | 50 | 30 | 50 | 30 |
| total | 100 | 100 | 100 | 100 |

### Example 1

A liquid mixture for forming the skin layer, obtained by mixing an water-borne polyurethane resin (IMPRANIL DLV: a trade name for a product by Bayer Co.)/a water-borne polyurethane resin (IMPRANIL DLF: a trade name for a product by Bayer Co.)/a pigment/an additive/a thickener (urethane-type) in a ratio of 70/30/15/0.3/2, was coated on a release paper (DN-TP-APW DE-7, a trade name for a product by Dainihon Printing and Ajinomoto Co.) at a thickness of 80 µm (wet). Immediately after coating, the coat was subjected to preliminary drying at 70°C for 1 minute in a Warner-Mathis dryer, and then dried at 120°C for 2 minutes. Subsequently, an adhesive liquid obtained by mixing an water-borne polyurethane resin obtained in Synthesis Example 1/a crosslinking agent (an associated polyisocyanate thickener; solid content 100 wt% and NCO content 16-18 wt%)/a thickener/colorant 1 in a ratio of 100/10/2/5 (apparent ratio) was coated onto the skin layer at a thickness of 80 µm (wet). Immediately after coating, the coat was subjected to drying at 70°C for 1 minute in the Warner-Mathis dryer, and the base fabric material was adhered (dry laminated) onto the adhesive layer. Thereafter, the laminate was cured for 2 minutes at 120°C, the laminate was subjected to aging for 2 days at 40°C, and the release paper was separated from the laminated artificial leather.

### Example 2

Artificial leather was formed by the same method as shown in Example 1 with the exception of using a skin layer composition obtained by mixing of the water-borne polyurethane (Synthesis Example 2)/crosslinking agent (water dispersible polyisocyanate: solid content of 100 wt%, NCO content of 16 to 18 wt%)/association-type thickener (Synthesis Example 4)/colorant 1 in a ratio of 100/10/2/5 (apparent ratio).

### Example 3

A liquid mixture for forming a skin layer, formed using a solvent-type polyurethane resin (CRISVON 73675L, a trade name of a product by Dainippon Ink and Chemicals Inc.)/pigment/MEK/DMF in a ratio of 100/15/30/10, was coated on a release paper (DN-TP-APT, flat-type, a trade name for a product of Dainihon Printing and Ajinomoto Co.) at a thickness of 80 µm (wet). Immediately after coating, the coat was dried at 120°C for 2 minute using a Warner-Mathis dryer. The formulation and the application of the adhesive layer and adhesion with the base fabric material were conducted by the same method as those of Example 1.

### Example 4

Artificial leather was formed by the same method as shown in Example 1 with the exception of using an adhesive coat composition obtained by mixing the water-borne polyurethane (Synthesis Example 2)/crosslinking agent (water dispersible polyisocyanate: solid content of 100 wt%, NCO content of 16 to 18 wt%)/association-type thickener (Synthesis Example 4)/colorant 2 in a ratio of 100/10/2/5 (apparent ratio).

### Example 5

Artificial leather was formed by the same method as shown in Example 1 with the exception of using an adhesive coat composition obtained by mixing of the water-borne polyurethane (Synthesis Example 2)/crosslinking agent (water dispersible polyisocyanate: solid content of 100 wt%, NCO content of 16 to 18 wt%)/association-type thickener (Synthesis Example 4)/colorant 1 in a ratio of 100/10/2/5 (apparent ratio).

### Example 6

Artificial leather was formed by the same method as shown in Example 3 with the exception of using an adhesive composition obtained by mixing of the water borne polyurethane (Synthesis Example 1 )/crosslinking agent(water dispersible polyisocyanate: solid content of 100 wt%, NCO content of 16 to 18 wt%)/association-type thickener (urethane-type)/colorant 2 at the ratio of 100/10/2/5 (apparent ratio).

### Example 7 (Reference)

Artificial leather was formed by the same method as shown in Example 1 with the exception of using an adhesive composition obtained by mixing of the water-borne polyurethane (Synthesis Example 2)/crosslinking agent (water dispersible polyisocyanate: solid content of 100 wt%, NCO content of 16 to 18 wt%)/carboxymethylcellulose/colorant 1 in a ratio of 100/10/2/5 (apparent ratio).

### Example 8

Artificial leather was formed by the same method as shown in Application Example 1 with the exception of using an adhesive composition obtained by mixing of the water-borne polyurethane (Synthesis Example 2)/crosslinking agent (water dispersible polyisocyanate: solid content of 100 wt%, NCO content of 16 to 18 wt%)/association-type thickener (Synthesis Example 5)/colorant 3 in a ratio of 100/10/2/5 (apparent ratio).

### Example 9

The artificial leather was formed by the same method as shown in Application Example 1 with the exception of using an adhesive composition obtained by mixing of the water-borne polyurethane (Synthesis Example 2)/crosslinking agent (water dispersible polyisocyanate: solid content of 100 wt%, NCO content of 16 to 18 wt%)/association-type thickener (Synthesis Example 4)/colorant 4 at the ratio of 100/10/2/5 (apparent ratio).

### Comparative Example 1

The skin layer was formed by the same method as that shown in Example 1. Furthermore, a liquid adhesive composition obtained by mixing the water-borne polyurethane resin (Synthesis Example 3)/crosslinking agent (water dispersible polyisocyanate: solid content of 100 wt%, NCO content of 16 to 18 wt%)/association type thickener (Synthesis Example 5)/colorant 1 in a ratio of 100/10/2/5 was coated onto the release paper at a thickness of 80 µm (wet). Immediately after coating, the base fabric material was laminated (wet laminate), and then the laminate was dried at 70°C for 1 minutes in a Warner-Mathis dryer. Thereafter, the laminate was subjected to aging for 2 days at 40°C, and the release paper was separated.

### Comparative Example 2

The skin layer was formed by the same method as that of Example 1 Furthermore, an adhesive composition prepared by mixing the water-borne polyurethane resin (Synthesis Example 3)/crosslinking agent (water dispersible polyisocyanate: solid content of 100 wt%, NCO content of 16 to 18 wt%)/association type thickener (Synthesis Example 5)/colorant 1 in a ratio of 100/10/2/5 was coated onto the peelable paper at a thickness of 80 µm (wet). Thereafter, the artificial leather was formed by the same process as that of Example 1.

### Comparative Example 3

A liquid mixture for forming the skin layer, prepared by mixing solvent-type polyurethane resin (CRISVON 7367L : trade name of a product of Dainippon Ink and Chemicals Inc.)/pigment/MEK/DMF at the ratio of 100/15/30/10, was coated onto a release paper (DN-TP-APT: trade name of a product of Dainihon Printing and Ajinomoto Co.) at a thickness of 80 µm (wet). Immediately after coating, the coat was subjected to preliminary drying at 70°C for 1 minute in a Warner-Mathis dryer and dried further at 120°C for 2 minutes in a Warner-Mathis dryer. Subsequently, an adhesive composition obtained by mixing a solvent-type polyurethane resin (CRISVON 4070, trade name of a product of Dainippon Ink and Chemicals Inc.)/crosslinking agent (CRISVON NX: trade name of a product of Dainippon Ink and Chemicals Inc.)/catalyst (CRISVON Accel HM: trade name of a product of Dainippon Ink and Chemicals Inc.)/Tol/DMF in a ratio of 100/12/3/20/10 (apparent ratio) was coated on the skin layer at a thickness of 80 µm (wet). Thereafter, the same steps as those of Example 1 were carried out.

### Evaluation of artificial leather

The artificial leather products obtained in the above-described Examples and Comparative Examples were evaluated in terms of the surface smoothness of the skin layers, peeling strengths, the feels of artificial leather, and the degree of VOC countermeasure, wherein the VOC countermeasure represents a degree of emitting organic solvent from products.

The results of evaluations for artificial leather obtained in the Examples and in the Comparative Examples are shown in Table 2 and Table 3, respectively. The standards for evaluation are shown below.

### (1) Surface smoothness of the skin surfaces

The degree of surface irregularity was evaluated by observing the cross sections of the artificial leather under an electron microscope.
Standards: ○: even ×: uneven

### (2) Peeling strength

The peeling strength of the artificial leather were measured using a Shimadzu Autograph AGS-G (product of Shimadzu Seisakusyo Co.) under conditions of a head speed of 20 mm/mm. and a full-scale of 5 kg.

### (3) Feel of the artificial leather

The feel of the products was evaluated by a feel test.

Standards for determination: soft ○---intermediateΔ--- hard ×

### (4) Degree of VOC (Volatile Organic Compounds) countermeasure

The degrees of VOC countermeasures were evaluated from the contents of organic solvents in all mixtures of Example and Comparative Examples.
Standards for evaluation: ○: 0 to 10%, Δ: 10 to 50%, ×: 50% or more.

**Table 2-1**

| parts | Example 1 | Example 2 | Example 3 | Example 4 | Example 5 |
|---|---|---|---|---|---|
| Adhesive layer | 100 Synthesis Example 1 | 100 Synthesis Example 2 | 100 Synthesis Example 1 | 100 Synthesis Example 1 | 100 Synthesis Example 2 |
| Crosslinking agent | 10 | 10 | 10 | 10 | 10 |
| Thickener | 2 Synthesis Example 4 | 2 Synthesis Example 4 | 2 Synthesis Example 4 | 2 Synthesis Example 4 | 2 Synthesis Example S |
| Colorant | 5 | 5 | 5 | 5 | 5 |
| Colorant (No) | (1) | (1) | (1) | (2) | (1) |
| Skin Layer | Aqueous-type | Aqueous-type | Solvent-type | Aqueous-type | Aqueous-type |
| Adhesion method | D | D | D | D | D |
| Surface smoothness | ○ | ○ | ○ | ○ | ○ |
| Peeling strength | 3.04 | 2.96 | 3.08 | 2.99 | 3.00 |
| Feel of products | ○ | ○ | ○ | ○ | ○ |
| VOC countermeasure | ○ | ○ | ○ | ○ | ○ |

| | | | | | |
|---|---|---|---|---|---|
| 1) D: Dry laminate, W: Wet laminate 2) kg/cm | | | | | |

**Table 2-2**

| | Example 6 | Example 7 | Example 8 | Example 9 |
|---|---|---|---|---|
| Adhesive layer | 100 Synthesis Example 2 | 100 Synthesis Example 1 | 100 Synthesis Example 1 | 100 Synthesis Example 1 |
| Crosslinking agent | 10 | 10 | 10 | 10 |
| Thickener | 2 Synthesis Example 4 | 2 CMC | 2 Synthesis Example 5 | 2 Synthesis Example 5 |
| Colorant | 5 | 5 | 5 | 5 |
| ColorantNo. | (2) | (1) | (3) | (4) |
| Skin Layer | Solvent-type | Aqueous-type | Aqueous-type | Aqueous-type |
| Adhesion method | D | D | D | D |
| Surface smoothness | ○ | △ | △ | △ |
| Peeling strength | 3.06 | 2.99 | 2.95 | 2.96 |
| Feel of products | ○ | △ | ○ | ○ |
| VOC countermeasure | △ | ○ | ○ | ○ |

| | | | | |
|---|---|---|---|---|
| 1) D: Dry laminate, W: Wet laminate 2) kg/cm 3) CMC: Carboxymethylcellulose | | | | |

**Table 3**

| | Comparative Example 1 | Comparative Example 2 | Comparative Example 3 |
|---|---|---|---|
| Adhesive layer | 100 Synthesis Example 3 | 100 Synthesis Example 3 | solvent-type |
| Crosslinking agent | 10 | 10 | |
| Thickener | 2 Synthesis Example 4 | 2 Synthesis Example 4 | |
| Colorant | 5 | 5 | |
| ColorantNo. | (1) | (1) | |
| Skin Layer | Aqueous-type | Aqueous-type | Sovent-type |
| Adhesion method | W | D | D |
| Surface smoothness | × | ○ | ○ |
| Peeling strength | 3.00 | 0.60 | 2.98 |
| Feel of products | × | ○ | ○ |
| VOC countermeasure | ○ | ○ | × |

| | | | |
|---|---|---|---|
| 1) D: Dry laminate, W: Wet laminate 2) kg/cm | | | |

The present invention provides an aqueous dry laminate adhesive composition for forming artificial leather, and a method for manufacturing artificial leather using the same. The aqueous dry laminate adhesive composition has excellent adhesiveness which is equivalent to that of organic solvent-type and the artificial leather obtained by use of the present adhesive composition have an even surface state in appearance, superior peeling strength, soft feel, and a good VOC countermeasure.

## Claims

1. An aqueous dry laminate adhesive composition for artificial leather comprising (A) a water-borne polyurethane resin, (B) a crosslinking agent, and (C) a thickener, wherein said water-borne polyurethane resin (A) has a softening temperature of less than 80°C and a viscosity of the melt at 80°C of less than 10⁵ Pa·s, when the softening temperature and the melt viscosity are measured using a Capillary Rheometer Shimadzu Flow Tester CFT-500D using an orifice having an inner diameter of 1 mm and a length of 1 mm and applying a load of 294.2 N (30 kgf), and when the temperature is increased at a rate of 3°C/min, the temperature at which the flow starts is defined as the softening temperature, and the melt viscosity is defined as the viscosity of the melt at the softening temperature, and
wherein a softening temperature of a cured product obtained after curing a reaction product between said water-borne polyurethane resin (A) and the crosslinking agent (B) is higher than 120°C, **characterized in that** the composition further comprises
(D) a colorant, and **in that** said water-borne polyurethane resin (A) has a weight-average molecular weight ranging from 2,000 to 200,000 and has a hydrophilic group and at least two groups containing active hydrogen atoms, which groups containing active hydrogen atoms are reactive with isocyanate groups and are selected from the group consisting of a carboxyl group, a hydroxyl group, and an amino group, and a content of said hydrophilic groups in the water-borne polyurethane resin (A) is at least 0.005 to 0.2 equivalent per 100 parts by weight of the finally obtained polyurethane resin, when the hydrophilic groups are ionic groups,
wherein said crosslinking agent (B) is a polyisocyanate compound, and said thickener (C) is an association polymer-type surface active agent, and said colorant (D) is constituted by water dispersible pigments, the surface of which is coated with water dispersible resins.

2. A method of manufacturing artificial leather comprising the steps of:
forming an adhesive layer by coating said aqueous dry laminate adhesive composition according to claim 1 on a skin layer of the artificial leather formed beforehand on the release paper; and
bonding said adhesive layer with a base fabric material of an artificial leather by a dry laminate process.

3. Artificial leather products obtainable by the method of claim 2.

## Patentansprüche

1. Wässrige Trockenlaminierklebezusammensetzung für Kunstleder, umfassend (A) ein wassergetragenes Polyurethanharz, (B) ein Vernetzungsmittel und (C) ein Verdickungsmittel, wobei das wassergetragene Polyurethanharz (A) eine Erweichungstemperatur von weniger als 80°C und eine Viskosität der Schmelze bei 80°C von weniger als 10⁵ Pa·s aufweist, wenn die Erweichungstemperatur und die Schmelzviskosität unter Verwendung eines Kapillarrheometers von Shimadzu, Flow Tester CFT-500D, unter Verwendung einer Öffnung mit einem Innendurchmesser von 1 mm und einer Länge von 1 mm und Aufbringen einer Last von 294,2 N (30 kgf) gemessen werden und wenn die Temperatur mit einer Geschwindigkeit von 3°C/min erhöht wird und die Temperatur, bei welcher das Fließen beginnt, als die Erweichungstemperatur definiert ist und die Schmelzviskosität als die Viskosität der Schmelze bei der Erweichungstemperatur definiert ist, und
wobei eine Erweichungstemperatur eines gehärteten Produkts, erhalten nach Härten eines Reaktionsprodukts zwischen dem wassergetragenen Polyurethanharz (A) und dem Vernetzungsmittel (B) höher ist als 120°C, **dadurch gekenn-zei chnet, dass** die Zusammensetzung weiterhin umfasst
(D) ein färbendes Mittel, und dadurch, dass
das wassergetragene Polyurethanharz (A) ein gewichtsmittleres Molekulargewicht im Bereich von 2.000 bis 200.000 aufweist und eine hydrophile Gruppe und mindestens zwei Gruppen, die aktive Wasserstoffatome enthalten, aufweist, wobei die Gruppen, die aktive Wasserstoffatome enthalten, mit Isocyanatgruppen reaktiv sind und ausgewählt sind aus der Gruppe, bestehend aus einer Carboxylgruppe, einer Hydroxylgruppe und einer Aminogruppe, und ein Gehalt der hydrophilen Gruppen in dem wassergetragenen Polyurethanharz (A) mindestens 0,005 bis 0,2 Äquivalente pro 100 Gewichtsteile des schließlich erhaltenen Polyurethanharzes ist, wenn die hydrophilen Gruppen ionische Gruppen sind,
wobei das Vernetzungsmittel (B) eine Polyisocyanatverbindung ist und das Verdickungsmittel (C) ein oberflächenaktives Mittel vom Assoziationspolymertyp ist und das färbende Mittel (D) durch in Wasser dispergierbare Pigmente dargestellt wird, deren Oberfläche mit in Wasser dispergierbaren Harzen beschichtet ist.

2. Verfahren zum Herstellen von Kunstleder, umfassend die Schritte:
Bilden einer Klebemittelschicht durch Auftragen der wässrigen Trockenlaminierklebemittelzusammensetzung gemäß Anspruch 1 auf eine Hautschicht aus dem Kunstleder, die zuvor auf dem Trennpapier gebildet wurde; und
Verbinden der Klebemittelschicht mit einem Grundgewebematerial eines Kunstleders durch ein Trockenlaminierverfahren.

3. Kunstlederprodukte, die durch das Verfahren nach Anspruch 2 erhältlich sind.

## Revendications

1. Composition adhésive aqueuse pour laminés formés à sec pour le cuir artificiel qui comprend (A) une résine polyuréthane à base d'eau, (B) un agent de réticulation, et (C) un agent épaississant, ladite résine polyuréthane aqueuse (A) ayant une température de ramollissement inférieure à 80 °C et une viscosité à l'état fondu à 80 °C inférieure à 10⁵ Pa.s, lorsque la température de ramollissement et la viscosité à l'état fondu sont mesurées en utilisant un rhéomètre capillaire de Shimadzu, testeur de flux modèle CFT-500D, utilisant un orifice ayant un diamètre interne de 1 mm et une longueur de 1 mm et appliquant une charge de 294,2 N (30 kgf), et lorsque la température augmente à une vitesse de 3 °C/minute, la température à laquelle le flux commence est définie comme la température de ramollissement, et la viscosité à l'état fondu est définie comme la viscosité de la fusion à la température de ramollissement, et
une température de ramollissement d'un produit durci obtenu après le durcissement d'un produit de réaction entre ladite résine polyuréthane à base d'eau (A) et l'agent de réticulation (B) étant supérieure à 120 °C, **caractérisée en ce que** la composition comprend en outre
(D) un colorant, et **en ce que**
ladite résine polyuréthane à base d'eau (A) a une masse moléculaire moyenne en poids dans la plage de 2 000 à 200 000 et a un groupe hydrophile et au moins deux groupes contenant des atomes d'hydrogène actifs, lesquels groupes contenant des atomes d'hydrogène actifs sont réactifs avec des groupes isocyanates et sont choisis dans le groupe constitué par un groupe carboxyle, un groupe hydroxyle, et un groupe amino, et une teneur en lesdits groupes hydrophiles dans la résine polyuréthane à base d'eau (A) est d'au moins 0,005 à 0,2 équivalent pour 100 parties en poids de la résine polyuréthane finalement obtenue, lorsque les groupes hydrophiles sont des groupes ioniques,
ledit agent de réticulation (B) étant un composé polyisocyanate, et ledit épaississant (C) étant un agent tensio-actif de type polymère associatif, et ledit colorant (D) étant constitué par des pigments dispersibles dans l'eau, dont la surface est revêtue de résines dispersibles dans l'eau.

2. Procédé de fabrication de cuir artificiel, qui comprend les étapes consistant à :
former une couche adhésive par revêtement de ladite composition adhésive aqueuse pour laminés formés à sec selon la revendication 1, sur une couche de peau du cuir artificiel formé auparavant sur le papier antiadhésif ; et
lier ladite couche adhésive avec un matériau de tissu de base d'un cuir artificiel par un procédé de laminage à sec.

3. Produits de cuir artificiel pouvant être obtenus par le procédé selon la revendication 2.
